# FASCICULE DE BREVET EUROPEEN

(11) **EP 0 997 062 B1**
(45) Date de publication et mention de la délivrance du brevet: **19.03.2003**
(21) Numéro de dépôt: 99440290.7
(22) Date de dépôt: 29.10.1999
(51) Int. Cl.: A01B 63/32

(54) **Machine agricole**
Landmaschine
Agricultural machine

(30) Priorité: 30.10.1998 FR 9813834
(43) Date de publication de la demande: 03.05.2000
(73) Titulaire: KUHN S.A., 67706 Saverne Cedex (FR)
(72) Inventeur: Wolff, Michel, 67670 Waltenheim sur Zorn (FR)

(56) Documents cités:
- EP-A- 0 570 315
- FR-A- 1 166 012
- FR-A- 2 526 883
- FR-A- 2 758 938

## Description

La présente invention se rapporte au domaine technique général du machinisme agricole et en particulier au domaine des machines agricoles comprenant une unité de travail destinée, durant le travail, à reposer au moins partiellement sur le sol et à suivre les irrégularités dudit sol.

L'invention concerne plus particulièrement une telle machine agricole pourvue d'une part d'un dispositif de manoeuvre pour remonter en position de transport et pour abaisser en position de travail l'unité de travail et d'autre part un dispositif d'allégement pour reporter une partie du poids de l'unité de travail sur le châssis.

On connaît déjà de telles machines agricoles, par exemple de FR-A-2 758 938, comportant :
- un châssis,
- une unité de travail liée au châssis au moyen d'un dispositif de suspension de sorte à pouvoir se déplacer par rapport au châssis durant le travail,
- au moins un vérin de manoeuvre pour remonter en position de transport ou abaisser en position de travail ladite unité de travail par rapport au châssis,
   et
- au moins un vérin d'allégement pour reporter une partie du poids de l'unité de travail sur le châssis.

Le(s) vérin(s) de manoeuvre et d'allégement sont reliés à une (des) source(s) de fluide par exemple à l'aide de conduites rigides ou flexibles. Il est donc important de fixer lesdits vérins de façon appropriée pour leur éviter une rotation sur eux-mêmes pouvant entraîner une rupture ou l'arrachage des conduites d'alimentation.

L'objet de la présente invention vise donc à réaliser une machine agricole comportant au moins un vérin de manoeuvre et d'allégement mobile par rapport au châssis et par rapport à l'unité de travail mais sans possibilité de rotation sur lui-même.

L'objet assigné à la présente invention est atteint à l'aide d'une machine agricole caractérisée en ce que le (chaque) vérin de manoeuvre et le (chaque) vérin d'allégement comportent chacun une chambre correspondante ménagée dans un même cylindre mobile, chacune desdites chambres étant reliée à une source de fluide et ledit cylindre étant associé à un moyen de blocage correspondant pour empêcher la rotation dudit cylindre autour de son axe longitudinal.

D'autres caractéristiques et avantages de l'invention ressortiront de la description détaillée figurant ci-après et faite en référence aux dessins annexés donnés à titre d'exemple non limitatif et dans lesquels :
- la **figure 1** représente une vue latérale d'une machine agricole conforme à l'invention, se trouvant en position de travail,
- **la figure 2** représente une vue latérale de la machine agricole lors du passage de l'unité de travail sur une bosse du sol,
- **la figure 3** représente une vue latérale de la machine agricole lors du passage de l'unité de travail dans un creux du sol,
- **la figure 4** représente une vue latérale de la machine agricole en position de transport,
- **la figure 5** représente une vue, selon la flèche V définie sur la figure 1, du vérin de manoeuvre et d'allégement et du moyen de blocage,
- **la figure 6** représente un mode de réalisation d'un circuit d'alimentation des vérins d'une machine agricole conforme à l'invention.

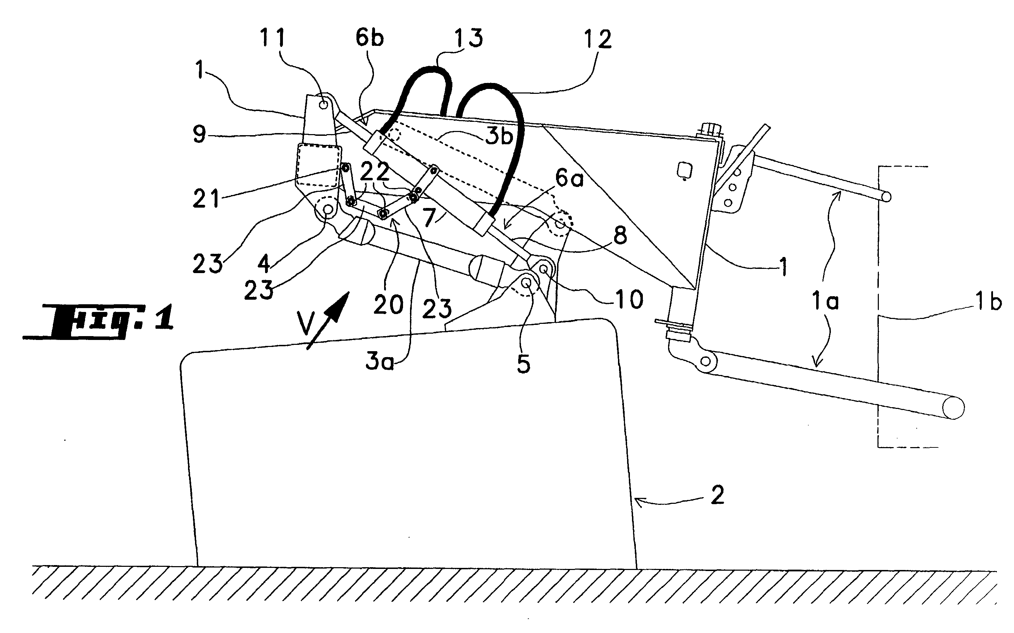

La figure 1 représente une faucheuse frontale conforme à l'invention. Il va de soi que d'autres machines agricoles ou parties de machines agricoles peuvent également être concernées par la présente invention.

La machine agricole représentée à la figure 1 comporte un châssis (1) destiné à être attelé à un système de relevage (1a) d'un tracteur (1b) d'une part et à supporter une unité de travail (2) d'autre part. L'unité de travail (2) est liée au châssis (1) à l'aide d'un dispositif de suspension de sorte à pouvoir se déplacer par rapport audit châssis (1) durant le travail. Cette unité de travail (2) est dans cet exemple constituée d'un groupe de fauche. L'unité de travail (2) est liée au châssis (1) à l'aide de bras articulés (3a, 3b) disposés par exemple de part et d'autre du châssis (1). Chaque bras articulé (3a, 3b) présente donc à ses extrémités des articulations (4, 5) du type sphérique. A titre d'exemple la machine agricole comporte un bras articulé (3b) central et deux bras articulés (3a) latéraux.

La machine agricole conforme à l'invention comprend également un vérin de manoeuvre (6a) et un vérin d'allégement (6b) permettant respectivement de positionner l'unité de travail (2) correctement vis-à-vis du châssis (1) et de réduire les réactions du terrain ou du sol sur ladite unité de travail (2) grâce à un report d'une partie du poids de l'unité de travail (2) sur le châssis (1).

Ceci est particulièrement avantageux lorsque ladite machine agricole évolue sur des sols irréguliers ou accidentés.

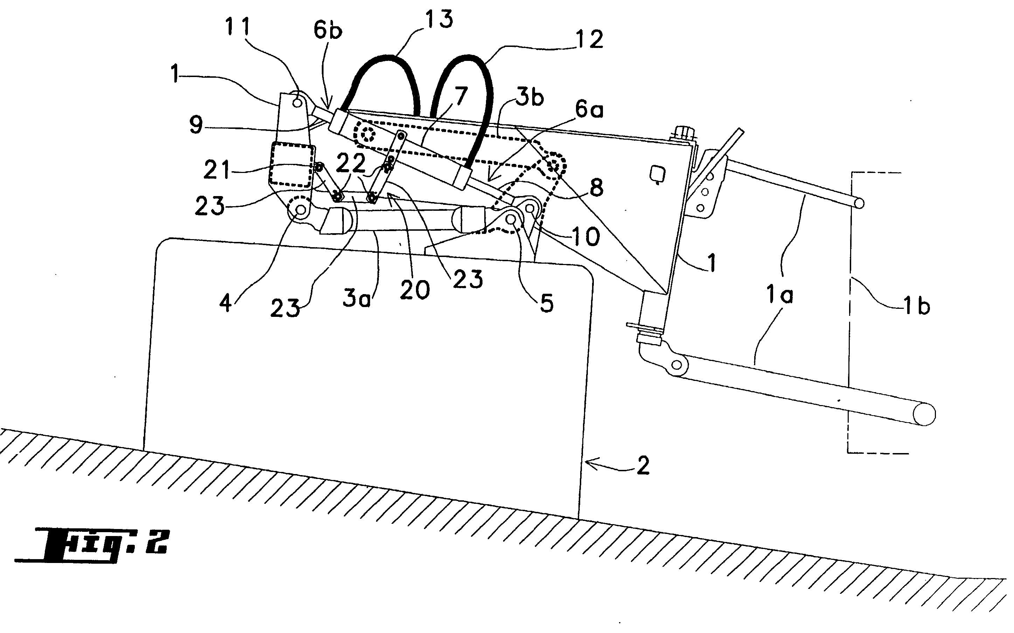

Pour la machine agricole représentée aux figures 1 à 4, le vérin de manoeuvre (6a) est un vérin hydraulique et le vérin d'allégement (6b) est un vérin oléo-pneumatique. Chaque vérin (6a, 6b) comporte une chambre correspondante ménagée dans un même cylindre (7), ainsi qu'une tige (8, 9) correspondante.

La machine agricole conforme à l'invention peut comporter un ou plusieurs vérins de manoeuvre (6a) et un ou plusieurs vérins d'allégement (6b). Dans l'exemple représenté aux figures, la machine comporte un vérin de manoeuvre (6a) et un vérin d'allégement (6b) sur chaque côté latéral.

Le vérin de manoeuvre (6a) comporte ainsi une tige de manoeuvre (8) dont l'une des extrémités est articulée sur l'unité de travail (2) en un point (10), l'autre extrémité constituant un piston susceptible de se déplacer à l'intérieur de la chambre de manoeuvre du cylindre (7).

Le vérin d'allégement (6b) comporte une tige d'allégement (9) dont une extrémité est articulée sur le châssis (1) en un point (11), l'autre extrémité constituant un piston susceptible de se déplacer à l'intérieur de la chambre d'allégement du cylindre (7).

On comprendra que dans un autre mode de réalisation de la machine agricole conforme à l'invention, le vérin de manoeuvre (6a) et le vérin d'allégement (6b) peuvent être permutés.

Le cylindre (7) est avantageusement mobile de manière à pouvoir coulisser sur les tiges de manoeuvre (8) et d'allégement (9). Le cylindre (7) n'est donc pas fixé solidairement au châssis (1) ou à l'unité de travail (2).

Chaque chambre du cylindre (7) est reliée via des conduites (12, 13) flexibles ou rigides à une source de fluide. Les sources de fluide, hydrauliques et/ou pneumatiques sont par exemple celles disponibles sur le tracteur (1b), ou bien des sources annexes montées directement sur la machine agricole.

La machine agricole conforme à l'invention comporte également un moyen de blocage (20) pour empêcher la rotation du cylindre (7) autour de son axe longitudinal. Le moyen de blocage (20) permet par conséquent d'éviter qu'une conduite (12, 13) d'alimentation en fluide de l'un quelconque des vérins (6a, 6b) ne soit rompue. Chaque cylindre (7) est donc associé à un moyen de blocage (20) correspondant.

Le moyen de blocage (20) est fixé sur le cylindre (7) et sur le châssis (1) ou sur une pièce solidaire dudit châssis (1). Le moyen de blocage (20) peut également être fixé sur le cylindre (7) et sur l'unité de travail (2) ou sur une pièce solidaire de l'unité de travail (2). En outre, le moyen de blocage (20) est déformable pour autoriser un déplacement du cylindre (7).

Avantageusement, le moyen de blocage (20) est déformable dans un plan (P) dirigé vers le haut, de préférence sensiblement vertical. Le plan (P) contient sensiblement l'axe longitudinal du cylindre (7) et ce pour autoriser un déplacement dudit cylindre (7) dans le même plan (P).

Selon un exemple de réalisation de l'invention, le moyen de blocage (20) et au moins une partie du cylindre (7), associée à la tige d'allégement (9) articulée sur le châssis (1), forment un polygone à plusieurs côtés, déformable dans le plan (P) défini précédemment. Dans l'exemple représenté aux figures, il s'agit d'un polygone à six côtés. Ce polygone à six côtés comporte un côté localisé entre le point (11) du châssis (1) et une articulation (21) du moyen de blocage (20) sur ledit châssis (1). Une configuration avec un polygone présentant un nombre de côtés différent peut également être envisagée sans pour autant sortir du cadre de la présente invention.

Selon un mode de réalisation de la machine conforme à l'invention, représentée par exemple à la figure 1, le moyen de blocage (20) comprend plusieurs pièces rigides reliées entre elles par des articulations (22) d'axes géométriques sensiblement orthogonaux au plan (P). Avantageusement certaines desdites pièces rigides sont constituées par des biellettes (23).

Le moyen de blocage (20) est par conséquent constitué d'un assemblage de biellettes (23) articulées entre elles, l'assemblage et la conception desdites biellettes (23) étant appropriés pour limiter les risques de torsion dudit assemblage. Les dimensions et les modes d'assemblage sont alors choisis en conséquence.

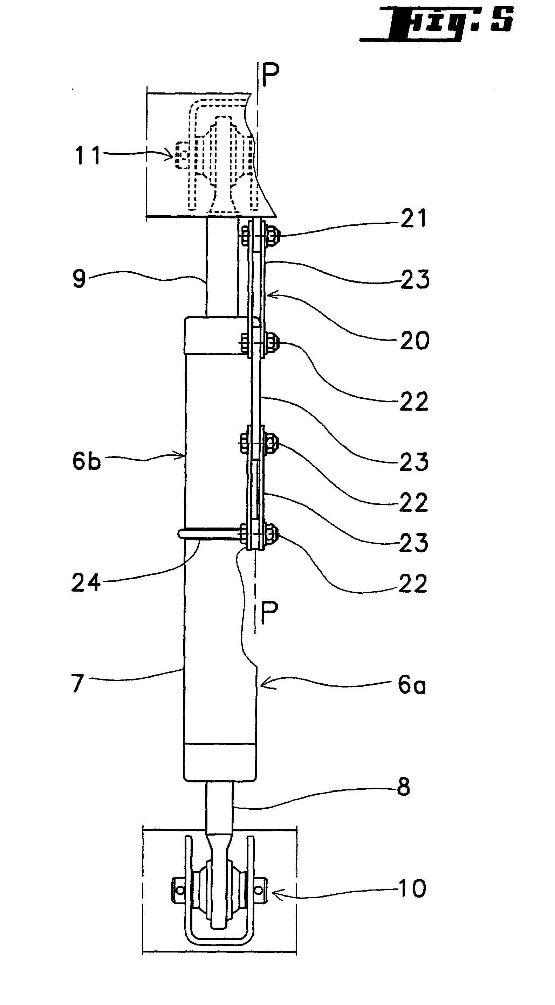

La figure 5 représente une vue d'une partie de la machine agricole conforme à l'invention, selon la direction de la flèche V de la figure 1. Le moyen de blocage (20) est constitué de biellettes (23) s'étendant dans le plan (P), orienté de préférence orthogonalement au plan de la figure. Le cylindre (7) est partiellement découpé pour mieux visualiser le plan (P). Le moyen de blocage (20) comprend avantageusement une bride (24) par l'intermédiaire de laquelle il est fixé sur le cylindre (7). La bride (24) est par exemple constituée d'un collier de serrage entourant ledit cylindre (7).

Selon l'exemple de réalisation représenté à la figure 5, les biellettes (23) sont alternativement doubles et simples renforçant ainsi la rigidité du moyen de blocage (20) vis-à-vis des contraintes de torsion.

Dans un autre exemple de réalisation de la machine agricole conforme à l'invention, non représenté aux figures, le moyen de blocage (20) peut être réalisé avec une chaîne de transmission. Les maillons d'une telle chaîne de transmission peuvent être simples ou doubles.

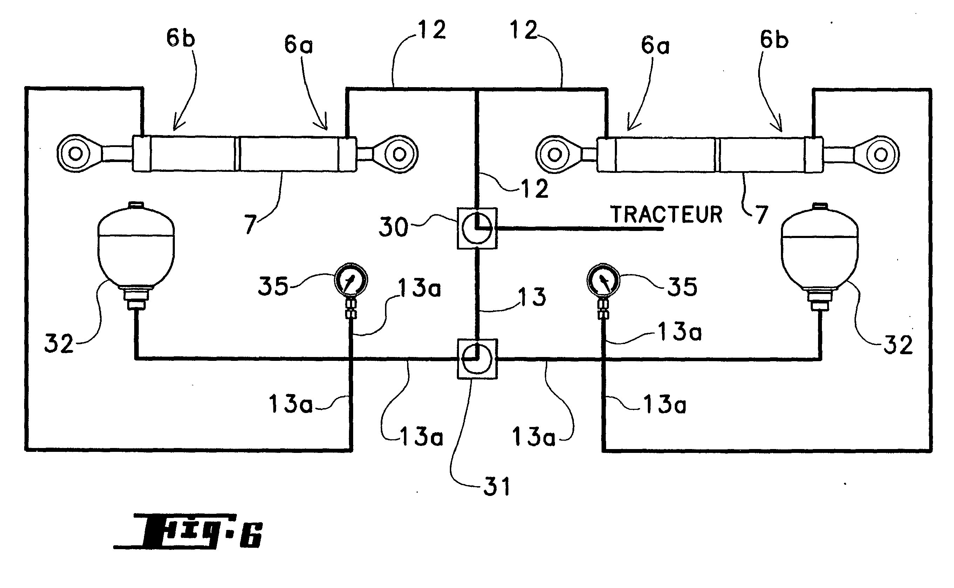

La figure 6 représente un exemple de réalisation d'un circuit hydraulique d'une machine agricole conforme à l'invention. Ce circuit se rapporte notamment à un exemple de réalisation comportant deux vérins de manoeuvre (6a) et deux vérins d'allégement (6b) répartis de chaque côté de la machine agricole.

Les vérins de manoeuvre (6a) et les vérins d'allégement (6b) sont alimentés par les conduites respectives (12, 13). Ces dernières sont susceptibles d'être mises en communication avec une source hydraulique du tracteur par l'intermédiaire d'un premier distributeur hydraulique (30) à plusieurs positions.

Le circuit hydraulique comprend également un deuxième distributeur hydraulique (31) à trois positions mettant en communication la source hydraulique avec l'un ou l'autre des vérins d'allégement (6b) et ce par l'intermédiaire de la conduite (13) et du premier distributeur (30).

La conduite (13) permet, dans l'une des positions du second distributeur (31), d'alimenter le vérin d'allégement (6b), un accumulateur à gaz (32) et un indicateur de pression (35). La conduite (13) est à cet effet divisée en trois branches (13a).

Chaque accumulateur à gaz (32) contient une pression prédéterminée de gaz, par exemple de l'azote, pour reporter une partie au moins du poids de l'unité de travail (2) sur le châssis (1). Le degré d'allégement obtenu est donc déterminé par la quantité d'huile introduite dans chaque accumulateur à gaz (32), et ce avec un positionnement approprié du premier et du second distributeur (30, 31). L'allégement peut donc être choisi en fonction de diverses conditions de travail. Une pression différente peut également être obtenue dans l'un des accumulateurs à gaz (32) par rapport à l'autre et ce pour compenser une répartition inégale du poids de l'unité de travail (2).

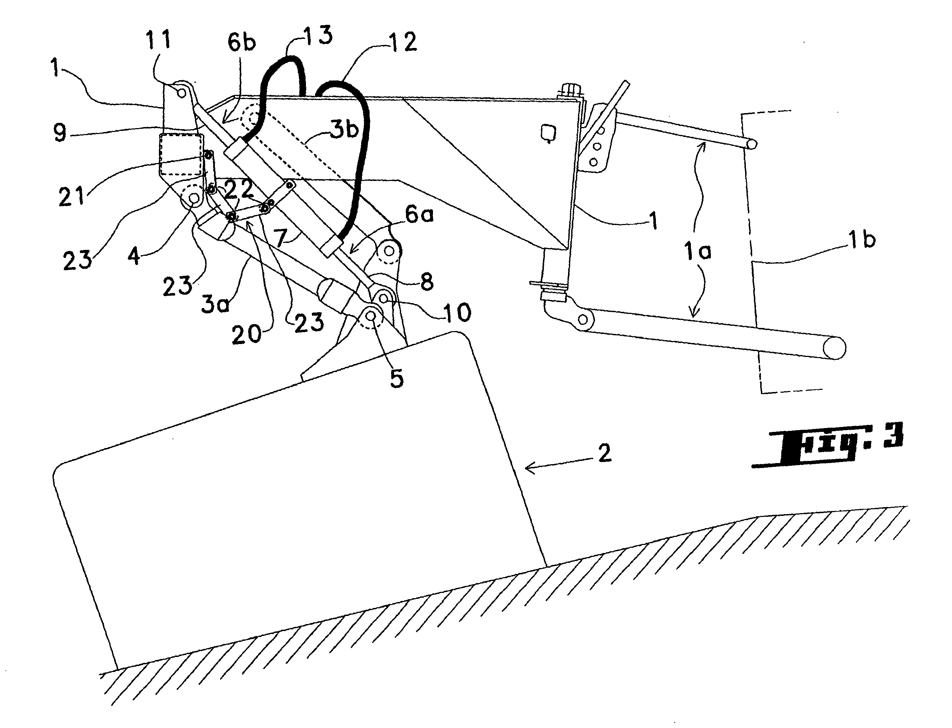

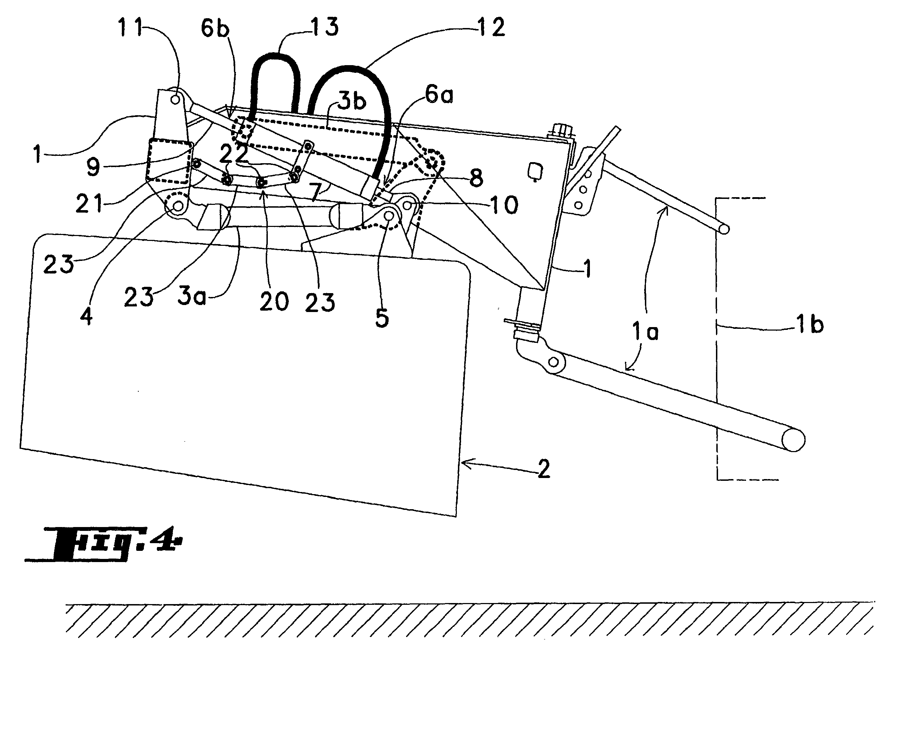

Lorsque l'unité de travail (2) est en position de travail, la tige de manoeuvre (8) est avantageusement en butée et en extension maximale, alors que la tige d'allégement (9) est sensiblement à mi-course à l'intérieur de la chambre d'allégement du cylindre (7). Chaque accumulateur à gaz (32) permet également, lorsque la tige d'allégement (9) n'est pas positionnée en butée dans sa chambre d'allégement, d'absorber des chocs ou des mouvements brusques auxquels est soumise l'unité de travail (2). La tige d'allégement (9) ne vient en butée que lorsque l'unité de travail (2) est en position relevée (figure 4) ou lorsqu'elle est en position basse extrême (figure 3).

On comprendra qu'une machine de travaux publics ou d'entretien du paysage, peut également être concernée par la présente invention.

## Revendications

1. Machine agricole comportant:
- un châssis (1),
- une unité de travail (2) liée au châssis (1) au moyen d'un dispositif de suspension de sorte à pouvoir se déplacer par rapport au châssis (1) durant le travail,
- au moins un vérin de manoeuvre (6a) pour remonter en position de transport ou abaisser en position de travail ladite unité de travail (2) par rapport au châssis (1),
et
- au moins un vérin d'allégement (6b) pour reporter une partie du poids de l'unité de travail (2) sur le châssis (1),
***caractérisée en ce* que** le (un) vérin de manoeuvre (6a) et le (un) vérin d'allégement (6b) comportent chacun une chambre correspondante ménagée dans un même cylindre (7) mobile, chacune desdites chambres étant reliée à une source de fluide et ledit cylindre (7) étant associé à un moyen de blocage (20) correspondant pour empêcher la rotation dudit cylindre (7) autour de son axe longitudinal.

2. Machine agricole selon la revendication 1, ***caractérisée en ce* que** le (chaque) vérin de manoeuvre (6a) est un vérin hydraulique et que le (chaque) vérin d'allégement (6b) est un vérin oléo-pneumatique.

3. Machine agricole selon la revendication 1 ou 2, ***caractérisée en ce* que** le (chaque) vérin de manoeuvre (6a) comporte une tige de manoeuvre (8) dont une extrémité est articulée sur l'unité de travail (2) ou sur le châssis (1) et dont l'autre extrémité constitue un piston susceptible de se déplacer à l'intérieur de la chambre correspondante (chambre de manoeuvre) ménagée dans le cylindre (7) correspondant.

4. Machine agricole selon l'une quelconque des revendications 1 à 3, ***caractérisée en ce* que** le (chaque) vérin d'allégement (6b) comporte une tige d'allégement (9) dont une extrémité est articulée sur le châssis (1) ou sur l'unité de travail (2) et dont l'autre extrémité constitue un piston susceptible de se déplacer à l'intérieur de la chambre correspondante (chambre d'allégement) ménagée dans le cylindre (7) correspondant.

5. Machine agricole selon l'une quelconque des revendications 1 à 4, ***caractérisée en ce* que** le moyen de blocage (20) est déformable et est fixé sur le cylindre (7) correspondant et sur le châssis (1) ou l'unité de travail (2) ou sur une pièce solidaire du châssis (1) ou de l'unité de travail (2).

6. Machine agricole selon la revendication 5, ***caractérisée en ce* que** le moyen de blocage (20) est déformable dans un plan (P) dirigé vers le haut, de préférence sensiblement vertical.

7. Machine agricole selon la revendication 6, ***caractérisée en ce* que** le plan (P) contient sensiblement l'axe longitudinal du cylindre (7) correspondant.

8. Machine agricole selon la revendication 6 ou 7, ***caractérisée en ce* que** le moyen de blocage (20) comprend plusieurs pièces rigides reliées entre elles par des articulations (22) d'axes géométriques sensiblement orthogonaux au plan (P).

9. Machine agricole selon la revendication 8, ***caractérisée en ce* qu'**au moins certaines desdites pièces rigides sont constituées par des biellettes (23).

10. Machine agricole selon la revendication 9, ***caractérisée en ce* que** lesdites biellettes (23) sont constituées par les maillons d'une portion de chaîne de transmission.

11. Machine agricole selon l'une quelconque des revendications 5 à 10, ***caractérisée en ce* que** le moyen de blocage (20) comprend en outre une bride (24) par l'intermédiaire de laquelle il est fixé sur le cylindre (7) correspondant.

12. Machine agricole selon la revendication 11, ***caractérisée en ce* que** la bride (24) est constituée par un collier de serrage entourant le cylindre (7) correspondant.

13. Machine agricole selon l'une quelconque des revendications 1 à 12, ***caractérisée en ce* qu'**elle constitue une faucheuse avec ou sans dispositif de traitement du produit coupé.

14. Machine agricole selon la revendication 13, ***caractérisée en ce* que** la faucheuse est une faucheuse frontale.

## Claims

1. Agricultural machine comprising:
- a chassis (1),
- a working unit (2) connected to the chassis (1) by means of a suspension device so as to be able to move with respect to the chassis (1) during work,
- at least one manoeuvring ram (6a) for raising the said working unit (2) into the transport position or lowering it into the work position with respect to the chassis (1),
and
- at least one lightening ram (6b) for transferring some of the weight of the working unit (2) onto the chassis (1),
***characterized in* that** the (a) manoeuvring ram (6a) and the (a) lightening ram (6b) each comprise a corresponding chamber formed in one and the same moving cylinder (7), each of the said chambers being connected to a source of fluid, and the said cylinder (7) is associated with a corresponding locking means (20) for preventing the said cylinder (7) from rotating about its longitudinal axis.

2. Agricultural machine according to Claim 1, ***characterized in* that** the (each) manoeuvring ram (6a) is a hydraulic ram and the (each) lightening ram (6b) is an oleopneumatic ram.

3. Agricultural machine according to Claim 1 or 2, ***characterized in* that** the (each) manoeuvring ram (6a) comprises a manoeuvring rod (8) one end of which is articulated to the working unit (2) or the chassis (1) and the other end of which constitutes a piston able to move inside the corresponding chamber (manoeuvring chamber) formed in the corresponding cylinder (7).

4. Agricultural machine according to any one of Claims 1 to 3, ***characterized in* that** the (each) lightening ram (6b) comprises a lightening rod (9) one end of which is articulated to the chassis (1) or the working unit (2) and the other end of which constitutes a piston able to move inside the corresponding chamber (lightening chamber) formed in the corresponding cylinder (7).

5. Agricultural machine according to any one of Claims 1 to 4, ***characterized in* that** the locking means (20) is deformable and fixed to the corresponding cylinder(7) and to the chassis (1) or the working unit (2) or to a part secured to the chassis (1) or secured to the working unit (2).

6. Agricultural machine according to Claim 5, ***characterized in* that** the locking means (20) is deformable in a plane (P) directed upwards, preferably substantially vertical.

7. Agricultural machine according to Claim 6, ***characterized in* that** the plane (P) substantially contains the longitudinal axis of the corresponding cylinder (7).

8. Agricultural machine according to Claim 6 *or 7,* ***characterized in* that** the locking means (20) comprises several rigid parts connected together by articulations (22) the geometric axes of which are substantially orthogonal to the plane (P).

9. Agricultural machine according to Claim 8, ***characterized in* that** at least some of the said rigid parts consist of links (23).

10. Agricultural machine according to Claim 9, ***characterized in* that** the said links (23) consist of the links of a portion of a transmission chain.

11. Agricultural machine according to any one of Claims 5 to 10, ***characterized in* that** the locking means (20) further comprises a clamp (24) by means of which it is fixed to the corresponding cylinder (7).

12. Agricultural machine according to Claim 11, ***characterized in* that** the clamp (24) consists of a clamping collar surrounding the corresponding cylinder (7).

13. Agricultural machine according to any one of Claims 1 to 12, ***characterized in* that** it constitutes a mower with or without a device for treating the cut product.

14. Agricultural machine according to Claim 13, ***characterized in* that** the mower is a front mower.

## Patentansprüche

1. Landmaschine, die
- einen Rahmen (1),
- eine Arbeitseinheit (2), die mittels einer Aufhängungsvorrichtung so mit dem Rahmen (1) verbunden ist, dass sie sich im Betrieb bezüglich des Rahmens (1) bewegen kann,
- mindestens einen Betätigungszylinder (6a) zum Anheben der Arbeitseinheit (2) bezüglich des Rahmens (1) in Transportstellung oder zu ihrem Absenken in Arbeitsstellung,
und
- mindestens einen Entlastungszylinder (6b) zum Übertragen eines Teils des Gewichts der Arbeitseinheit (2) auf den Rahmen (1),
umfasst,
***dadurch gekennzeichnet,* dass** der (ein) Betätigungszylinder (6b) und der (ein) Entlastungszylinder (6b) jeweils eine in einem gleichen beweglichen Zylinder (7) ausgebildete entsprechende Kammer enthalten und jede der Kammern mit einer Fluidquelle verbunden ist, wobei der Zylinder (7) einem entsprechenden Sperrmittel (20) zugeordnet ist, um die Drehung des Zylinders (7) um seine Längsachse zu verhindern.

2. Landmaschine nach Anspruch 1, ***dadurch gekennzeichnet,* dass** der (jeder) Betätigungszylinder (6a) ein Hydraulikzylinder ist und dass der (jeder) Entlastungszylinder (6b) ein Öl-Druckluftzylinder ist.

3. Landmaschine nach Anspruch 1 oder 2, ***dadurch gekennzeichnet,* dass** der (jeder) Betätigungszylinder (6a) eine Betätigungsstange (8) enthält, von der ein Ende an der Arbeitseinheit (2) oder am Rahmen (1) angelenkt ist und von der das andere Ende einen Kolben bildet, der sich im Inneren der im entsprechenden Zylinder (7) ausgebildeten entsprechenden Kammer (Betätigungskammer) verschieben kann.

4. Landmaschine nach irgend einem der Ansprüche 1 bis 3, ***dadurch gekennzeichnet,* dass** der (jeder) Entlastungszylinder (6b) eine Entlastungsstange (9) enthält, von der ein Ende am Rahmen (1) oder an der Arbeitseinheit (2) angelenkt ist und von der das andere Ende einen Kolben bildet, der sich im Inneren der im entsprechenden Zylinder (7) ausgebildeten entsprechenden Kammer (Entlastungskammer) verschieben kann.

5. Landmaschine nach irgend einem der Ansprüche 1 bis 4, ***dadurch gekennzeichnet,* dass** das Sperrmittel (20) verformbar und an dem entsprechenden Zylinder (7) und dem Rahmen (1) oder der Arbeitseinheit (2) oder an einem fest mit dem Rahmen (1) oder der Arbeitseinheit (2) verbundenen Teil befestigt ist.

6. Landmaschine nach Anspruch 5, ***dadurch gekennzeichnet,* dass** das Sperrmittel (20) in einer nach oben ausgerichteten, vorzugsweise im wesentlichen vertikalen, Ebene (P) verformbar ist.

7. Landmaschine nach Anspruch 6, ***dadurch gekennzeichnet,* dass** die Ebene (P) im wesentlichen die Längsachse des entsprechenden Zylinders (7) enthält.

8. Landmaschine nach Anspruch 6 oder 7, ***dadurch gekennzeichnet,* dass** das Sperrmittel (20) mehrere starre Teile umfasst, die durch Gelenke (22) mit im wesentlichen orthogonal zur Ebene (P) verlaufenden geometrischen Achsen miteinander verbunden sind.

9. Landmaschine nach Anspruch *8,* ***dadurch gekennzeichnet,* dass** mindestens bestimmte der starren Teile durch Schwingarme (23) gebildet werden.

10. Landmaschine nach Anspruch 9, ***dadurch gekennzeichnet,* dass** die Schwingarme (23) durch die Kettenglieder eines Kraftübertragungskettenteils gebildet werden.

11. Landmaschine nach irgend einem der Ansprüche 5 bis 10, ***dadurch gekennzeichnet,* dass** das Sperrmittel (20) des weiteren einen Verbindungsbügel (24) umfasst, mittels dessen es am entsprechenden Zylinder (7) befestigt ist.

12. Landmaschine nach Anspruch 11, ***dadurch gekennzeichnet,* dass** der Verbindungsbügel (24) durch eine den entsprechenden Zylinder (7) umgebende Klemmschelle gebildet wird.

13. Landmaschine nach irgend einem der Ansprüche 1 bis 12, ***dadurch gekennzeichnet*, dass** sie eine Mähmaschine gegebenenfalls mit einer Schnittgutbehandlungsvorrichtung darstellt.

14. Landmaschine nach Anspruch 13, ***dadurch gekennzeichnet,* dass** es sich bei der Mähmaschine um eine Front-Mähmaschine handelt.
